# EUROPÄISCHE PATENTSCHRIFT

(11) **EP 0 348 712 B1**
(45) Veröffentlichungstag und Bekanntmachung des Hinweises auf die Patenterteilung: **03.02.1993**
(21) Anmeldenummer: 89110444.0
(22) Anmeldetag: 09.06.1989
(51) Int. Cl.: H01M 4/04, H01M 4/26

(54) **Einrichtung zum Vibrationsfüllen von porösen Elektrodengerüsten für galvanische Zellen**
Device for filling by vibration porous electrode supports used in galvanic cells
Dispositif de remplissage par vibration de supports d'électrode poreux pour cellules galvaniques

(30) Priorität: 01.07.1988 DE 3822209
(43) Veröffentlichungstag der Anmeldung: 03.01.1990
(73) Patentinhaber: DEUTSCHE AUTOMOBILGESELLSCHAFT MBH, 73733 Esslingen (DE)
(72) Erfinder: Imhof, Otwin, Dr., D-7440 Nürtingen (DE)

(56) Entgegenhaltungen:
- CH-A- 491 512
- PATENT ABSTRACTS OF JAPAN, Band 11, Nr. 198 (E-519)[2645], 25. Juni 1987; & JP-A-62 24 559 (SHIN KOBE ELECTRIC MACH. CO., LTD) 02-02-1987
- PATENT ABSTRACTS OF JAPAN, Band 5, Nr. 11 (E-42)[683], 23. Januar 1981; & JP-A-55 139 763 (NIPPON DENCHI K.K.) 31-10-1980

## Beschreibung

Gegenstand der Erfindung ist eine Einrichtung zum Vibrationsfüllen von porösen Elektrodengerüsten für galvanische Zellen gemäß dem Oberbegriff des Patentanspruchs 1.

Es ist bekannt, Elektroden für galvanische Zellen dadurch herzustellen, daß ein poröses Elektrodengerüst,z.B. ein Kunststoffschaum oder ein Faserstrukturgerüst mit feinkörnigen aktiven Füllstoffen, der aktiven Masse, gefüllt wird. Um das Eindringen der aktiven Masse in die Poren zu erleichtern und zu vervollständigen sind mechanische oder physikalische Hilfsmittel wie Rütteleinrichtungen, Vibratoren, Ultraschall und dgl. bekannt.

So ist z.B. aus DE-AS 12 87 663 eine Vibrationsfülleinrichtung für Elektrodengerüste bekannt, die aus einem trogförmigen Füllraum besteht, dessen Boden durch eine Schwingplatte gebildet wird. In diesen Füllraum wird eine Schicht der pastenförmigen aktiven Masse gegeben, das poröse Elektrodengerüst wird parallel zu der Schwingplatte aufgelegt und mit einer weiteren Schicht der aktiven Masse überschichtet, so daß das Elektrodengerüst innerhalb des Füllraumes vollständig von aktiver Masse umgeben ist. Durch die Einwirkung von Ultraschallschwingungen wird dann die aktive Masse in die Poren des Elektrodengerüstes eingerüttelt.

Nachteilig bei dieser Einrichtung ist vor allem, daß das gesamte Füllgefäß zur Vibration gebracht werden muß, da ja der Boden des Füllgefäßes aus der Vibrationsplatte entsteht. Eine solche Fülleinrichtung ist nur für relativ kleine Elektrodengerüste geeignet, da bei großen Gerüsten der Füllraum und die zu beschleunigenden Massen zu groß werden und die Einrichtung nicht nur unwirtschaftlich wird, sondern auch Materialermüdungserscheinungen an den Wänden des Füllraumes auftreten können, die sich in Rissen und dgl. bemerkbar machen können.

Die Aufgabe der Erfindung besteht darin, eine einfach und preiswert herstellbare Einrichtung zum Vibrationsfüllen zu finden, die mechanisch stabil und unkompliziert ist und mit der sich auch große Elektrodengerüste einfach füllen lassen.

Diese Aufgabe wird durch die in den Patentansprüchen beschriebene Einrichtung gelöst. Wesentlich an der Einrichtung ist, daß die Schwingplatte mit ihrer Haupterstreckung vertikal angeordnet ist und sich innerhalb des Füllraumes befindet. Dadurch wird erreicht, daß nicht mehr das gesamte Füllgefäß in Schwingungen versetzt werden muß sondern nur noch die innerhalb des Füllgefäßes sich befindende aktive Masse in dem Umfang, in dem es zur Füllung des Elektrodengerüstes erforderlich ist. Zur Füllung wird das zu füllende Elektrodengerüst parallel zu der Schwingplatte in einem Abstand von etwa 2 bis 50 mm angeordnet, bevorzugt wird ein Abstand von 5 bis 15 mm. Dieser Abstand bezieht sich dabei selbstverständlich auf die Stellung der Schwingplatte, bei der die Schwingplatte im maximal in Richtung auf das Fasergerüst ausgeschwungenen Zustand sich befindet. Unterschreitet man diesen Abstand, so besteht die Ge fahr, daß die Schwingplatte beim Schwingen das Fasergerüst berührt und beschädigt, überschreitet man den maximalen Abstand, so steigt der Energiebedarf bei nachlassender Wirkung sehr stark an. Generell kann gesagt werden, daß der optimale Abstand zwischen Schwingplatte und Elektrodengerüst auch von der Dicke des Elektrodengerüstes abhängig ist. So wird man bei dünnen Elektrodengerüsten kleinere Abstände von der Schwingplatte wählen als bei dicken Elektrodengerüsten.

Der Abstand der Schwingplatte von der Wandung des Füllraumes soll so bemessen sein, daß die Schwingplatte bei maximaler Amplitude die Wandung des Füllgefäßes nicht berühren kann. Darüber hinaus sollte ein zusätzlicher Abstand vorhanden sein, so daß die aktive Masse in dem Zwischenraum zwischen Schwingplatte und Wandung nicht spritzt, da das zu einem überflüssigen Energieverbrauch führen würde. Selbstverständlich ist auch vom Boden des Füllgefäßes ein gewisser Abstand zur Schwingplatte erforderlich und zwar soll dieser Abstand mindestens 1 mm betragen. Sind in der aktiven Masse größere Partikel vorhanden oder ist mit der Bildung solcher größerer Partikel zu rechnen, so muß der Mindestabstand der Unterkante der Schwingplatte vom Boden des Füllraumes entsprechend vergrößert werden. Die Abmessungen der Schwingplatte bzw. des eingetauchten Teils der Schwingplatte sollen, mit einer Schwankungsbreite von etwa 20%, in etwa den Abmessungen des zu füllenden Elektrodengerüstes entsprechen. Dadurch wird beim Füllen des Elektrodengerüstes die gesamte im Raum zwischen dem Elektrodengerüst und der Schwingplatte befindliche Paste gleichzeitig in gezielte Bewegung versetzt und es findet eine gleichmäßige und schnelle Füllung statt. Es können selbstverständlich auch mehrere nebeneinander in die Paste eingehängte Elektrodengerüste gleichzeitig, mit einer entsprechend vergrößerten Schwingplatte, gefüllt werden. Eine Vergrößerung der Schwingplattenabmessungen um über 20% gegenüber der bzw. den zu füllenden Elektrodengerüsten bringt bei der Füllung keine weitere Verbesserung, erhöht aber den Energieaufwand. Unterschreitet man bei den Schwingplattenabmessungen die Abmessungen der zu füllenden Elektrode um mehr als etwa 20%, so dauert die Füllung merklich länger und es kann, sofern die Schwingplatte sehr klein wird, auch zu ungleichmäßigen und zu unvollständigen Füllungen des Elektrodengerüstes kommen.

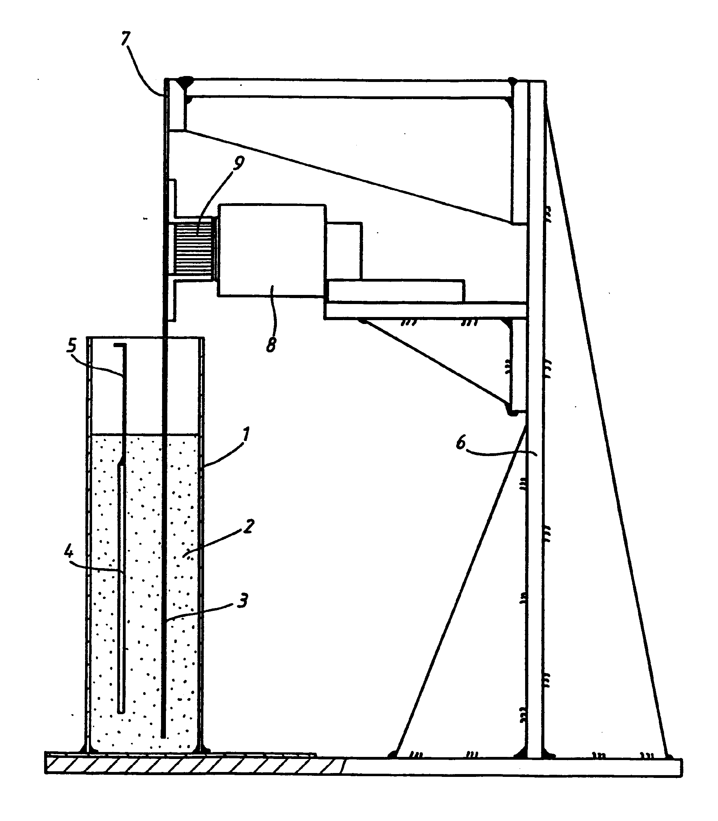

Der Antrieb der Schwingplatte kann auf die verschiedensten, dem Fachmann wohl bekannten Arten erfolgen, z. B. mittels eines Unwuchtmotors, mittels eines Elektrovibrators auf elektromagnetischem Wege, auf piezoelektrischem Wege usw. Die Art des Antriebs richtet sich nach der Größe der zu bewegenden Schwingplatte und auch nach der Frequenz, mit der die Schwingplatte betrieben wird. Zum Füllen von Faserstruktur-Elektrodengerüsten hat sich z. B. eine Frequenz von etwa 30 Hz bis 100 Hz, mit der die Schwingplatte auf das Fasergerüst zu- und wegbewegt wird, bewährt. Dabei ist es von Vorteil, wenn die Beschleunigung der Schwingplatte so eingestellt ist, daß sich an ausgezeichneten Stellen an der Oberfläche der Paste im Füllraum Wellen bilden.
In der Abbildung wird schematisch eine Einrichtung zum Füllen von porösen Elektrodengerüsten gezeigt. In ein fest aufgespanntes Gefäß 1, das mit einer Suspension 2 der aktiven Masse gefüllt ist, ragt die Schwingplatte 3 hinein. Gegenüber der Schwingplatte 3 befindet sich in der Suspension das zu füllende Elektrodengerüst 4, das über die Stromableiterfahne 5 mittels einer nicht dargestellten Haltevorrichtung in der Suspension gehalten wird. Die Schwingplatte ist mit ihrem oberen Ende 7 an dem Gerüst 6 befestigt, das auch den Schwingankermotor 8 trägt. Die Schwingplatte 3 wird über den Anker 9 des Schwingankermotors angetrieben, wobei die Elastizität der Schwingplatte deren Bewegung auf das Elektrodengerüst hin und von ihm weg zuläßt. Statt der starren Einspannung der Schwingplatte an ihrem oberen Ende 7 könnte dort selbstverständlich auch eine elastische Einspannung über Gummipuffer erfolgen. Auch ist es möglich, die Einspannung ganz weg zu lassen und die Schwingplatte lediglich an dem Anker 9 zu befestigen, falls dieser über eine entsprechende Führung verfügt. Der Antrieb der Schwingplatte muß auch nicht unbedingt von oberhalb des Gefäßes erfolgen, z. B. ist es auch denkbar, die Schwingplatte mittels eines durch die Seitenwand des Behälters 1 geführten Stempels anzutreiben. Allerdings ist für eine solche Lösung eine Durchführung durch die Wand des Behälters 1 erforderlich, was mit einem gewissen Aufwand verbunden ist und auch Dichtungsprobleme aufwerfen kann.

Die mit der Erfindung erzielbaren Vorteile liegen vor allem darin, daß auf einfache Weise und sehr schnell auch große Elektrodengerüste gefüllt werden können, daß in dem Behälter eine größere Menge an Suspension der aktiven Masse vorhanden sein kann oder kontinuierlich eingespeist wird, so daß nicht nach jedem gefüllten Elektrodengerüst die Suspension erneuert werden muß und daß vor allem die Geräuschentwicklung gegenüber solchen Fülleinrichtungen, wo der ganze Behälter schwingt, ganz erheblich reduziert wird.

## Patentansprüche

1. Einrichtung zum Vibrationsfüllen von porösen Faserstruktur-Elektrodengerüsten für galvanische Zellen, mit einem die aktive Masse enthaltenden Füllraum und einer Schwingplatte, deren Hauptfläche parallel zu der Hauptfläche eines in der Paste befindlichen porösen Elektrodengerüstes steht,
**dadurch gekennzeichnet**,
daß zusätzlich eine geeignete Halterung für die in dem Füllraum vertikale Anordnung des Elektrodengerüsts vorgesehen ist
daß die Schwingplatte mit ihrer Haupterstreckung ebenfalls vertikal innerhalb des Füllraumes angeordnet ist, und
daß der Abstand der Schwingplatte von dem parallel angeordneten Elektrodengerüst 2 bis 50 mm und der Abstand der Schwingplatte zum Boden des Füllraumes mindestens 1 mm beträgt.

2. Einrichtung nach Anspruch 1,
**dadurch gekennzeichnet**,
daß die Abmessungen des eingetauchten Teils der Schwingplatte den Abmessungen des Elektrodengerüstes mit einer maximalen Abweichung von etwa 20 % entsprechen.

## Claims

1. Device for the vibration filling of porous fibre structure electrode frames for voltaic cells, having a filling chamber containing the active compound and a vibrating plate, the principal surface of which is parallel to the principal surface of a porous electrode frame situated in the paste, characterized in that a suitable holder is additionally provided for the vertical arrangement of the electrode frame in the filling chamber, in that the vibrating plate is likewise arranged with its principal extension vertical within the filling chamber, and in that the distance of the vibrating plate from the electrode frame, which is arranged parallel, is 2 to 50 mm and the distance of the vibrating plate from the base of the filling chamber is at least 1 mm.

2. Device according to Claim 1, characterized in that the dimensions of the immersed part of the vibrating plate correspond to the dimensions of the electrode frame, with a maximum deviation of about 20 %.

## Revendications

1. Dispositif de remplissage par vibration de supports d'électrodes poreux, de structure fibreuse, pour cellules galvaniques, comportant un volume de remplissage, contenant la masse active, et une plaque oscillante dont une surface principale est orientée parallèlement à la surface principale d'un support d'électrode poreux situé dans la pâte, caractérisé en ce qu'il est 'prévu additionnellement un dispositif approprié pour maintenir la disposition verticale du support d'électrode dans le volume de remplissage, en ce que la plaque oscillante est disposée en majeure partie également verticalement à l'intérieur du volume de remplissage et en ce que l'espacement entre la plaque oscillante et le support d'électrode disposé parallèlement est de 2 à 50 mm et l'espacement entre la plaque oscillante et le fond du volume de remplissage est au moins de 1 mm.

2. Dispositif selon la revendication 1, caractérisé en ce que les dimensions de la partie immergée de la plaque oscillante correspondent aux dimensions du support d'électrode, avec un écart maximal d'environ 20%.
